# EUROPEAN PATENT APPLICATION

(11) **EP 2 545 821 A1**
(43) Date of publication of application: **16.01.2013**
(21) Application number: 12176215.7
(22) Date of filing: 12.07.2012
(51) Int. Cl.: A47J 27/21, A47J 31/40

(54) **Kettle**

(30) Priority: 12.07.2011 GB 201111932
(71) Applicant: Spectrum Brands (UK) Limited, Fallsworth Manchester M35 0HS (GB)
(72) Inventor: Saba, Simon, Manchester, lancashire M35 0HS (GB)
(74) Representative: Misselbrook, Paul

(57) **Abstract**

A water heating apparatus 100 such as a kettle includes a water tank 110, a water heater arranged to heat water within the water tank 110, and a controlled filling mechanism 120. The controlled filling mechanism 120 comprises a hopper having an inlet 132 and an outlet 134. The inlet forms an upwardly facing opening allowing water to be filled into the hopper 130 from a tap or other suitable source. The outlet is arranged in fluid communication with the water tank 110. The controlled filling mechanism 120 also includes a dispensing means 140 that is arranged to open and close the outlet 134 of the hopper. When the outlet 134 is closed, water filled in through the opening is stored in the hopper 130. The dispensing means is arranged so that when operated to open the outlet 134, the outlet opens to empty the contents of the hopper into the water tank. Consequently, rather than empting a controlled portion of the water from the hopper into the tank, the dispensing means empties all the water and the control of the volume of water being filled into the water tank is determined by the volume of water placed in the hopper. This is advantageous as it allows the water tank to be filled with fresh water for each filling.

## Description

### FIELD OF INVENTION

The present invention relates to water heating apparatus. More specifically, the present invention relates to a kettle.

### BACKGROUND OF THE INVENTION

A kettle is a water heating apparatus comprising a water heater and a water tank in fluid communication with an outlet and an inlet. In use, a user fills the water tank with water via the inlet, generally using a tap. Subsequently, the water is heated via the water heater and dispensed via the outlet. Generally, the water tank includes a measurement scale, such that the user can fill it with the correct amount of water. However, the tap can be difficult to control, and the kettle is often filled in a confined space around a sink such that the measurement scale is fully or partially obscured. Consequently, the water tank may be filled with more water than is required by the user. Accordingly, energy is wasted in heating the additional water.

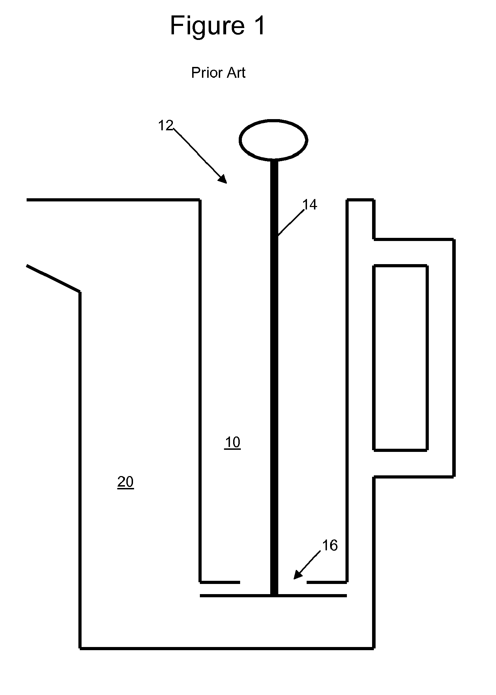

In view of the above it is known to provide the kettle with a controlled filing mechanism. For example, it is known to house an internal reservoir 10 within the water tank 20, as illustrated in Figure 1. In use, a user fills the internal reservoir 10 at an inlet 12 via a tap. Thereafter, the amount of water entering the water tank 20 is controlled by the user via the actuation of a plunger 14 which is operable to open an outlet 16 to dispense a required volume of water into the water tank 20. The controlled mechanism allows the internal reservoir 10 to be filled with a large volume of water and by operation of the plunger 14, a predetermined portion of the reservoir 10 can be emptied in to the water tank 10 for heating. Consequently, only a controlled amount of water is heated thereby saving energy.

However, it is generally desired within the industry for the volume of the water tank to have a capacity of 1.7 litres or 1.5 Litres. Thus, the kettle having a controlled filling mechanism has to be large in order to achieve the required volume of water tank whilst also accommodating the internal reservoir 10. In addition, because kettles with an internal reservoir encourage the user to fill the reservoir, the kettle becomes heavy and hard to handle. Moreover, water in the reservoir is consumed a portion at a time meaning that water in the reservoir that is used for subsequent fillings is left standing between boiling operations. This also leads to a further inclusion of a seal and valve arrangement to prevent any water left in the reservoir from being poured out when the kettle is tipped in order to pour the boiled water. The reservoir 10 being arranged in the water tank also prevents easy cleaning of the water tank.

It is an object of aspects of the present invention to overcome at least one of the above or other problems. More particularly, an object is to provide a water heating apparatus which encourages the use of fresh water for each boil. A further aim is to provide a compact kettle having a controlled filling mechanism. A yet further aim is to provide a kettle having a controlled filling mechanism with improved cleaning access.

### SUMMARY OF THE INVENTION

According to the present invention there is provided a water heating apparatus and method of filling a water heating apparatus as set forth in the appended claims. Other features of the invention will be apparent from the dependent claims, and the description which follows.

According to the exemplary embodiments a water heating apparatus comprises a water tank having a water heater that is arranged to be able to heat water within the water tank. A controlled filling mechanism is provided. The controlled filling mechanism comprises a hopper having a dispensing means.

According to an exemplary embodiment, the controlled filling mechanism is detachable from the water heating apparatus. In this instance the controlled filling mechanism is attached to the water heating apparatus using fixings that are able to be easily removed, for instance without the need to use tools. Advantageously, this allows the controlled filling mechanism to be used independently from the kettle as a measuring device. Moreover, it enables access to the water tank for cleaning, filling or the like. Consequently, the controlled filling mechanism may replicate the lid of a conventional kettle.

In one exemplary embodiment, the dispensing means is operable to empty the hopper into the water tank on each operation. Consequently, rather than empting a controlled portion of the water from the hopper into the tank, the dispensing means empties all the water and the control of the volume of water being filled into the water tank is determined by the volume of water placed in the hopper. This is advantageous as it allows the water tank to be filled with fresh water for each filling. Furthermore, because no water is left in the hopper after dispensing water into the water tank, the hopper can be open to the top for easy filling, and no seals or valves are required between the hopper and entrance thereto in order to prevent water from escaping when pouring the water from the tank. Suitably the hopper's volume is less than half the volume of the water tank or less than a third of the volume of the water tank or less than a quarter or less than 20 percent of the volume of the water tank.

According to another exemplary embodiment, the hopper has an opening and an outlet. The dispensing means is arranged within the outlet to open and close said outlet. Here the dispensing means comprises an operable valve and a trigger mechanism, wherein the trigger mechanism is operable to open and close the operable valve. Advantageously, the dispensing means is operable without blocking the inlet. This is advantageous because it allows the kettle to be filled directly in a conventional manner by filling water into the hopper whilst activating the trigger so that the water flows directly into the water tank. Furthermore, in the exemplary embodiments, the opening to the hopper is open to the top of the kettle and in the preferable embodiments the opening covers substantially the whole of the top of the kettle and even more preferably, has a similar profile to the profile of the water tank. Here profile means cross-section through an intended horizontal axis.

According to another exemplary embodiment, the hopper has an opening and an outlet, wherein the opening is substantially open to a top of the kettle. Advantageously, this allows a user to easily view the contents of the hopper. Thus, inner walls of the hopper may include markings defining certain volumes, for instance one or two cups. Because the hopper is open to the top of the kettle, the user can easily view the water level to control the amount to be emptied into the water tank. Suitably, the opening may be larger than the outlet. Or the opening may be substantially the full area of the top of the kettle. Preferably, the hopper is tapered from the opening to the outlet so that markings on the inner side walls are easily visible from the top of the kettle.

The exemplary embodiments may be used in conjunction with one or more of the other exemplary embodiments or independently. Moreover, all features contained herein may be combined with any of the above aspects and in any combination.

### BRIEF DESCRIPTION OF THE DRAWINGS

For a better understanding of the invention, and to show how embodiments of the same may be carried into effect, reference will now be made, by way of example, to the accompanying diagrammatic drawings in which:
Figure 1 shows a side view of a prior art kettle;
Figure 2 shows a perspective view of a water heating apparatus in accordance with an exemplary embodiment;
Figures 3 and 4 show a top and bottom perspective views respectively of a controlled filling mechanism in accordance with an exemplary embodiment;
Figure 5 shows a cross-sectional side perspective view of a further exemplary embodiment;
Figures 6 and 7 are partial cross-sectional perspective view of a water heating apparatus of further exemplary embodiments respectively;
Figure 8 is a perspective view of an exemplary controlled filling mechanism; and
Figure 9 is a cross sectional view of a further exemplary controlled filling mechanism.

### DETAILED DESCRIPTION OF THE EXEMPLARY EMBODIMENTS

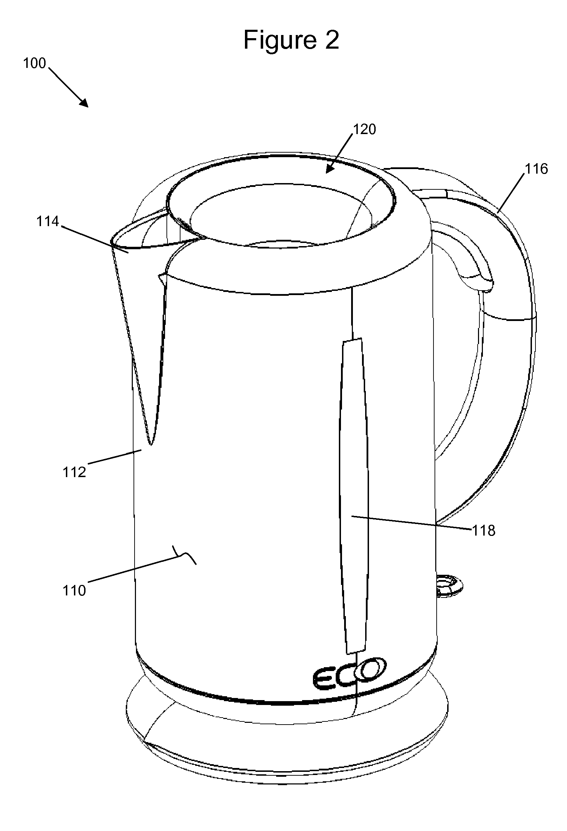

Referring to Figure 2, a water heating apparatus 100 such as a kettle is shown in accordance with an exemplary embodiment. The water heating apparatus forms a water tank 110. A water heater (not shown) is arranged to heat water within the water tank 110 and is electrically connected and operated in any conventional way. The water heating apparatus 100 includes a controlled filling mechanism 120.

In the exemplary embodiments, the water tank 110 is defined within a kettle body 112. The kettle body 112 is of the form of any known kettle construction and includes a spout 114 for emptying water from the water tank and a handle 116 for holding the water heating apparatus 100. Whilst the kettle body 112 is shown as being substantially cylindrical, any suitable configuration is envisaged. Likewise, although the spout 114 is shown as extending from a top side of the kettle body and the handle 116 being 'u-shaped' and connected at two locations to the kettle body 112, any suitable configuration of spout and handle is envisaged. The kettle body 112 may also include a fill indicator 118. Again, the fill indicator is optional and may comprise any known construction. For instance, as shown in the figures, the fill indicator 118 may be a float retained within a channel that is in fluid communication with the water tank 110, wherein the float is visible through a transparent portion of the kettle body. Calibrated markings on the fill indicator allow the user to determine the volume of water within the water tank.

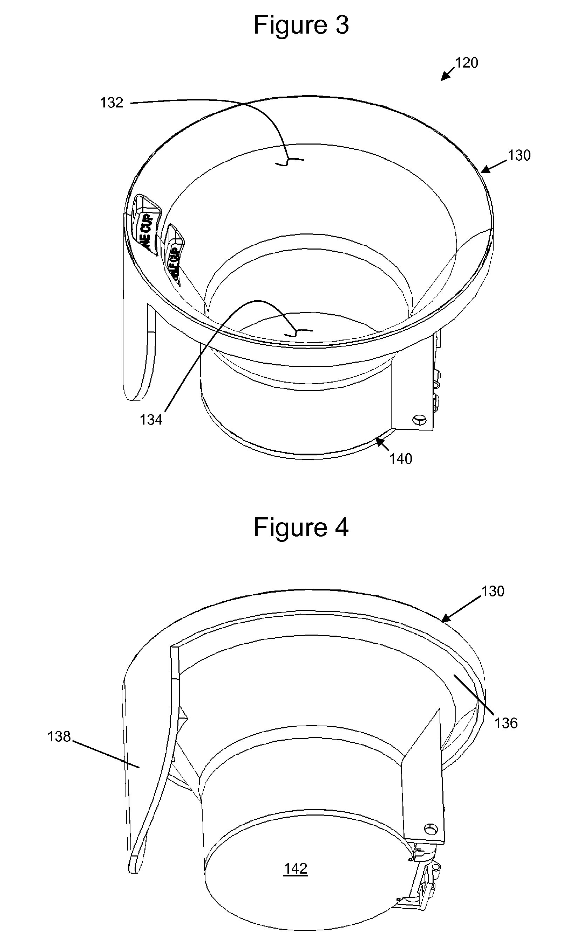

Figures 3 and 4 show an exemplary controlled filling mechanism 120. Here the controlled filling mechanism 130 comprises a hopper having an inlet 132 and an outlet 134. The inlet forms an upwardly facing opening allowing water to be filled into the hopper 130 from a tap or other suitable source. The outlet is arranged in fluid communication with the water tank 110. The controlled filling mechanism 120 also includes a dispensing means 140 that is arranged to open and close the outlet 134 of the hopper. When the outlet 134 is closed, water filled in through the opening is stored in the hopper 130. The dispensing means is arranged so that when operated to open the outlet 134, the outlet opens to empty the contents of the hopper into the water tank. Suitably, the water in the hopper 130 is fed into the water tank 110 0 by gravity. Consequently, the advantageous features of controlled filling are achieved and an environmentally friendly kettle is provided as energy is not used to heat water that is not used /needed. Moreover, the kettle's weight is reduced and therefore handling ability improved. Also, the kettle can be used as a measuring device by pouring the measured water out of the kettle.

Referring to Figure 3, the opening 132 of the hopper forms the widest part of the hopper. Thus the hopper is open to the top of the heating apparatus, which enables the user to easily view the fill level of the hopper. Moreover, it is preferable if the opening extends substantially the full area of the top of the heating apparatus. In the preferable embodiment shown in the Figures, the hopper includes demarcations to help the user to recognise the amount of water filled within the hopper 130. For instance one or two fill marks may be provided to indicate two different volumes. However, it will be appreciated that there may be more or less demarcations. Furthermore, it will be appreciated that these fill volumes may correspond to usual drinks sizes such as full cup sizes or half cup sizes. For instance a small cup may be around 0.15-0.2 Litres volume and a large cup size may be around 0.2-0.3 Litres volume. As shown in the figures, the demarcations may comprise ridges formed by a change in incline or shape of the hopper. However, any known demarcation may be used. It is preferable if at least a portion of the hopper is tapered from the opening towards the outlet as this increases visibility of the filling process.

The controlled filling mechanism is attached to the water heating apparatus by fitting into the top of the water heating apparatus, and suitably, as shown in the Figures, by fitting into the kettle body 112. Whilst the controlled filling mechanism may be secured fast to the water heating apparatus, in one exemplary embodiment, as herein described, the controlled filling mechanism is detachable from the water heating apparatus. Advantageously, this allows the controlled filling apparatus to be used separately to the water heating apparatus as a measuring device. Furthermore, by being detachable, the controlled filling apparatus replaces a conventional lid and therefore allows easy access to the water tank for cleaning etc or to fill the water heating apparatus in the conventional way. In the exemplary embodiment, the hopper 130 has a cooperating feature shown as a lip 136 that cooperates with a corresponding feature on the water heating apparatus so locate the controlled filling mechanism. Suitably, a portion of the hopper forms a handle for use in holding the controlled filling mechanism when separated from the water heating apparatus. For instance, referring to Figure 4, a handle 138 is shown as an extension that extends downwardly from a portion of an edge of the hopper and spaced from the walls of the hopper. Consequently, because the extension only extends from a portion of the edge, a convenient handle is provided.

In the exemplary embodiments, the dispensing means 140 is arranged to open and close the outlet of the hopper to empty the contents of the hopper into the water tank. A suitable dispensing means 140 is described in relation to Figure 4. Here the dispensing means 140 is shown as an operable valve and trigger mechanism. In one particular exemplary embodiment, the operable valve is shown as a moveable plug 142 and in particular a hinged plug. Here, the hinged plug comprises a member that closes the outlet to the hopper. Suitably a flat plate is shown,. However it will be appreciated that the member may take other forms and sealing features such as sealing rings or ridges or a combination may be used to ensure the hinged plug forms a sealed closure to the hopper when in the closed position. The hinged plug is hinged to one side of the hopper so that when the trigger mechanism is operated, the hinged plug is urged to pivot to open the hopper's outlet. The hinged connection between the hinged plug 142 and hopper 130 may take any known form. However, as shown, parallel ridges on the hopper may be arranged to form a pivot axis spaced from the walls of the hopper through which protrusions from the hinged plug can be arranged to provide the hinged connection. As will be understood, the trigger mechanism is arranged to cause the hinged plug to move between an open position and a closed position. In the exemplary embodiment, the trigger mechanism biases the operable valve to the closed position. Suitably, the trigger mechanism may therefore include a biasing means such as a torsion spring or the like that acts on the hinged plug to close the hoppers outlet when the trigger mechanism is not operated. The biasing force will need to be sufficient to maintain the hinged plug in the closed position whilst the hopper is filled.

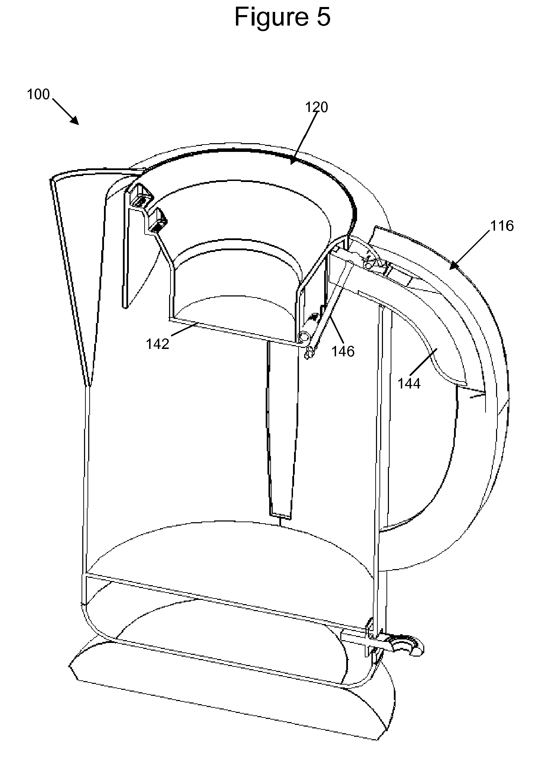

In the exemplary embodiment, the hinged mechanism also includes an actuation means to cause the plug to move to the open position. Whilst the actuation means may comprise any known means for moving the hinged plate against the biasing means, for instance a manually moveable member or linked members that directly acts on the hinged plug to urge it towards the open position, a suitable means will be described with reference to Figure 5. Here, the trigger mechanism comprises a biasing means (not shown) to bias the operable valve to the closed position, and a trigger 144. Suitably, the trigger 144 is connected to the operable valve so that movement of the trigger 144 causes the operable valve to move to the open position. This movement could be linear movement. However, in the exemplary embodiment shown in Figure 5, the trigger 144 is hinged and operable by pivoting the trigger 144. Here, movement of the trigger 144 acts to urge the operable valve 142 to the open position via link 146. Conveniently, as shown in the Figures, the trigger 144 is located on the handle 116 so that the user may easily operate the trigger whilst holding the kettle in the same hand. However, it may be preferable to locate the trigger elsewhere. For instance, the trigger may be located on the hopper. This may be advantageous as users may find it hard to operate the trigger with the same hand as that holding the handle. Also, when the hopper is able to be removed from the water heating apparatus, by the trigger being self contained on the hopper, the controlled measurement mechanism is easily detachable and useable as a separate piece of equipment.

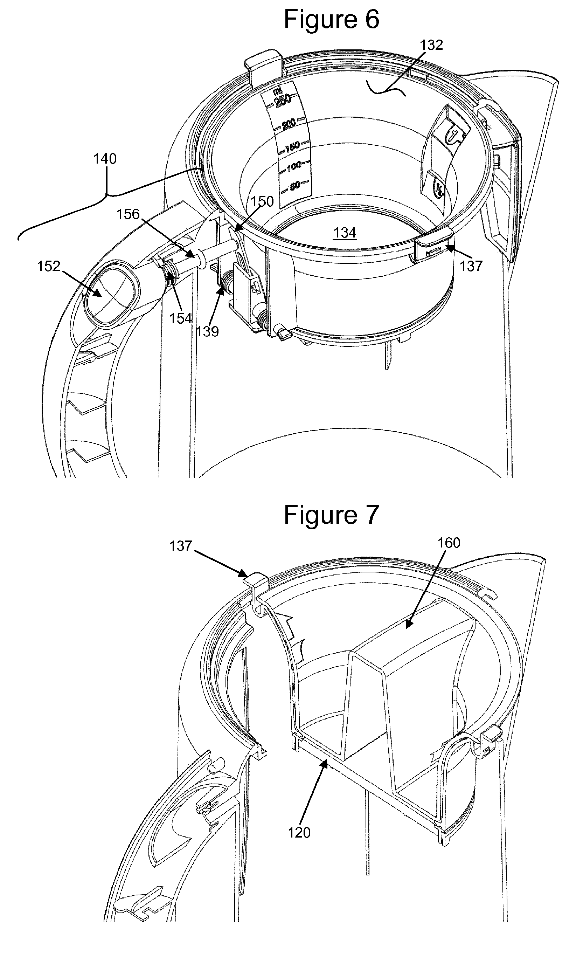

Referring to Figure 6, an exemplary detachable controlled filling mechanism is described. The advantage of a detachable controlled filling mechanism has been herein explained and includes improved cleaning of the water tank and improved usefulness around the kitchen as a separate liquid measure.

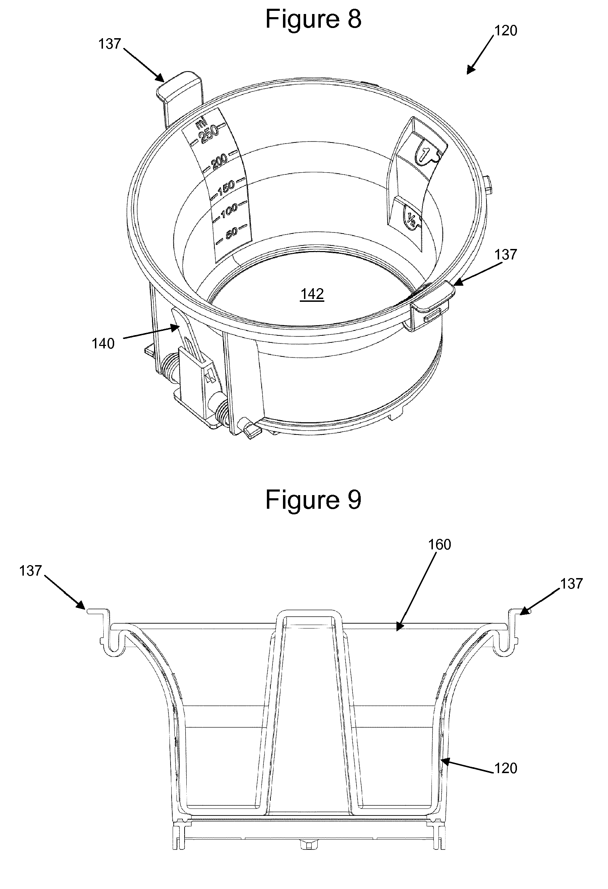

As will be understood from the foregoing, the controlled filling mechanism 120 comprises a hopper having an inlet 132 and an outlet 134. In Figure 7, the inlet 132 is shown covered by a dust cap 160. The dust cap is used to cover the hopper during storage or transport and is intended to be removed for day-to-day use. Referring to Figure 9, the dustcap is shown in an exemplary embodiment as following the contour of the hopper. A dispensing means 140 is provided to operate the outlet 134.

The hopper is suitably shown as a generally cylindrical body. An upper edge of the hopper defines the opening and a lower edge defines the exit aperture. The hopper includes attachment means to releasably connect the hopper to the kettle. For instance fixings 137 are shown. The fixings 137 can operate in any known manner, for instance, the hopper may screw or bayonet fix into the main body of the kettle. However, in the embodiment shown in Figure 6, the fixings are hinged with respect to the hopper so that movement relative to the hopper allows a protrusion 137a to pass and abut a corresponding fixture on the body of the kettle. In this instance, the fixings on the hopper can be flexed inwards, towards the hopper in order to release the controlled filling mechanism from the kettle. Suitably, the fixings are shown as being connected to the hopper via a flexible region, such as a u-shaped length of material having a natural resiliency. Whilst the fixings have been described in relation to the moveable part being arranged on the hopper, it will be appreciated that they could alternatively or additionally be arranged on the kettle.

The dispensing means 140 is arranged to open and close the exit of the hopper. According to the exemplary embodiments described herein, a particularly suitable arrangement of the dispensing means 140 comprises a moveable plug 142. In Figure 6, the moveable plug is shown as a plate like part hinged to the hopper to one side thereof. As will be appreciated, in the closed position, the moveable plug seals against the hopper to close the exit 134. Any known hinge may be employed, but a simple hole and protrusion arrangement is shown in Figure 6. Furthermore, as has been herein described, the moveable plug is suitably biased to the closed position by a spring 139. In the exemplary embodiment shown in Figure 6, a link 150 is provided that is attached to the moveable plug. Movement of the link 150 is arranged to move the plug 142. For instance, the link is attached fast to the pivot axis of the moveable plug, so that rotation of the link about the pivot axis, pivots the moveable plug.

As has been described, a trigger mechanism is provided as part of the dispensing means 140 to activate opening and closing of the hopper's outlet. As a convenient location, it is preferable, as shown in Figure 6, for the trigger mechanism to be located in the main body of the kettle, and in particular in the region of the handle. However, for the hopper to be releasable, this requires the trigger mechanism to be separable to the moveable plug. This is achieved in the exemplary embodiment as shown in Figure 6. In this instance, the trigger mechanism comprises a push button 152 housed in the kettle body. The push button is housed in a usual way, for instance by locating in an aperture and being slideably mounted therein. The push button includes a push rod 154 for extending through the kettle body and into the main water tank. Appropriate seals are provided. A bias is applied to the push button 152 to urge it to a closed arrangement. A bias means can be provided and is shown in figure 6 as spring 156. The push rod 154 is arranged to abut the lever 150. Consequently, when the push button is activated, the push rod 154 abuts the link 150 and urges it towards the hopper. Said movement causes the lever to rotate and the moveable plug therefore unseats from hopper to empty the contents into the water tank. Because the push rod and lever do not connect together and rather abut and slide relative thereto, there is no connection. Consequently, the hopper can be removed from the kettle by releasing the attachment means 137.

As shown in Figure 8, when removed, the hopper, moveable plug and lever remain intact allowing the hopper to function as a separate dispense / measure.

Consequently there is provided an improved controlled filling mechanism. It will be appreciated that whilst the controlled filling mechanism has been described herein in relation to use with a water heating apparatus, it is contemplated that the controlled filling mechanism could be sold or manufactured as a separate replaceable or upgradeable unit. Consequently, in further exemplary embodiments there is provided a controlled filling mechanism as herein described for use with a water heating apparatus.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A water heating apparatus comprising:
a water tank;
a water heater, arranged to heat water within the water tank; and
a controlled filling mechanism arranged to control filling of the water tank;
wherein:
the controlled filling mechanism includes a hopper, which has an inlet and an outlet, and a dispensing means that is moveably arranged on the hopper to open and close the outlet; and
the dispensing means is arranged to empty the hopper when operated;
the controlled filling mechanism being mounted to the water tank by fixings that allow the controlled filing mechanism to be easily removed

2. The water heating apparatus of claim 1, wherein the volume of the hopper is less than half the volume of the water tank.

3. The water heating apparatus of any preceding claim, wherein a trigger is provided through the water tank, wherein the trigger controls the dispensing means to move between open and closed positions, and the trigger abuts the dispensing means to activate said movement.

4. The water heating apparatus of any preceding claim, wherein the inlet is not blocked when operating the dispensing means.

5. The water heating apparatus of any preceding claim, wherein the opening is located on a top of the water heating apparatus.

6. The water heating apparatus of claim 5, wherein the opening extends substantially the whole area of the top of the water heating apparatus.

7. The water heating apparatus of any preceding claim, wherein the hopper includes at least one demarcation calibrated to mark a determined partial volume of the hopper.

8. The water heating apparatus of any preceding claim, wherein a portion of the hopper tapers from the inlet to the outlet.

9. The water heating apparatus of any preceding claim, wherein the dispensing means comprises a trigger mechanism and an operable valve, wherein the trigger mechanism is arranged to open and close the operable valve.

10. The water heating apparatus of claim 9, wherein the trigger mechanism comprises a biasing means, which biases the operable valve to the closed position, and a trigger that is moveable to move the operable valve to the open position against the bias.

11. The water heating apparatus of Claims 9 or 10, wherein the operable valve comprises a moveable plug.

12. A method of filling a water heating apparatus as claimed in any of claims 1 to 11, wherein the method comprises:
filling the hopper with a required volume of water;
operating the dispensing means to empty the hopper into the water tank; and
removing the hopper from the water tank

13. The method of claim 12, wherein the method comprises filling the water tank directly by holding open the dispensing means when it is desired to fill the water heating apparatus in a conventional manner.

14. The method of any of claims 12 or 13, wherein the method comprises removing the controlled filling mechanism from the water heating apparatus and using the controlled filling mechanism as a measuring device separately to the water heating apparatus.

15. A controlled filling mechanism comprising:
a hopper, which has an inlet and an outlet, and a dispensing means that is moveably arranged on the hopper to open and close the outlet; and
the dispensing means is arranged to empty the hopper when operated;
the controlled filling mechanism including fixings for being mounted to a water tank of a heating apparatus in a manner that is easy to be removed.
